**Europäisches Patentamt**

**European Patent Office**

**Office européen des brevets**

(11) Veröffentlichungsnummer: **0 253 978 B1**

# (12) EUROPÄISCHE PATENTSCHRIFT

(45) Veröffentlichungstag der Patentschrift: **04.03.92**

(51) Int. Cl.⁵: **H01F 27/28**, H04N 3/195

(21) Anmeldenummer: **87106990.2**

(22) Anmeldetag: **14.05.87**

(54) **Elektrischer Wandler.**

(30) Priorität: **23.05.86 DE 3617348**

(43) Veröffentlichungstag der Anmeldung:
**27.01.88 Patentblatt 88/04**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
DE-A- 1 563 204          DE-A- 3 039 530
DE-C- 590 371            DE-C- 902 632
FR-A- 2 476 898          GB-A- 1 114 713
US-A- 3 894 270          US-A- 4 311 977

(73) Patentinhaber: **EWD Electronic-Werke
Deutschland GmbH**

**W-7730 Villingen-Schwenningen(DE)**

(72) Erfinder: **Goseberg, Walter, Dipl.-Ing.
Kopenhagenerstrasse 81
W-3000 Hannover(DE)**

(74) Vertreter: **Einsel, Robert, Dipl.-Ing.
E W D Electronic-Werke Deutschland GmbH
Patent- und Lizenzabteilung Göttinger
Chaussee 76
W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Schaltnetzteil- oder Zeilentransformator

Die Erfindung geht aus von einem Schaltnetzteil- oder Zeilentransformator gemäß dem Oberbegriff des Anspruchs 1. Ein derartiger Transformator ist bekannt durch die US-A-3 894 270.

Bei elektrischen Wandlern ist es bekannt, eine Wicklung über einen von einer Steuerschaltung periodisch leitend bzw. gesperrt gesteuerten Schalter, beispielsweise einen Schalttransistor, an eine Betriebsgleichspannung zu legen. Es können mehrere Wicklungen zum Abgreifen gewünschter Sekundärspannungen vorgesehen sein.

Beim Betrieb des Wandlers können in der Umgebung des Wandlers nachteilig elektromagnetische Streufelder auftreten, die in der Nähe des Wandlers angeordnete Komponenten in unerwünschter Weise beeinflussen können. Diese Streufelder werden hervorgerufen durch das getaktete Anlegen bzw. Abklemmen der Betriebsspannung, das bei heutigen Fernsehgeräten mit der Zeilenfrequenz, also mit etwa 16 kHz erfolgt. Bei Wandlern, die einen nicht vollständig geschlossen verlaufenden Kern aufweisen, treten die genannten Streufelder in verstärktem Maße auf.

Es ist daher bekannt, parallel zu dem Schalter einen Kondensator vorzusehen, der die hochfrequenten Anteile, die beim Abschalten der nunmehr kurzzeitig nicht mehr mit der Spannungsquelle verbundenen Wicklung in den durch Induktion auftretenden Spannungsspitzen enthalten sind, aufnimmt. Eine solche Lösung hat jedoch den Nachteil, daß ein zusätzliches Teil, nämlich der genannte Kondensator, benötigt wird. Solche Kondensatoren sind jedoch - zumal wegen der meist erheblich über der Betriebsspannung liegenden erforderliche Spannungsfestigkeit - verhältnismäßig teuer und verursachen zusätzlich Raum- und Bestückungsaufwand.

Der Erfindung liegt die Aufgabe zugrunde, einen elektrischen Wandler der eingangs genannten Art so auszubilden, daß ungünstige Abstrahlungsbedingungen für hochfrequente Schwingungen geschaffen sind. Diese Aufgabe wird durch die im Anspruch 1 angegebenen Maßnahme gelöst. Die abhängigen Ansprüche betreffen vorteilhafte Weiterbildungen der Erfindung.

Es ist auch ein Übertrager für einen Schaltregler bekannt (DE-A1 3 039 530), bei dem die Abschirmung einer heißen Transformatorwicklung durch eine kalte Transformatorwicklung erfolgt. Dort liegt ein Unterabschnitt einer Tertiärwicklung, die eine Impulsspannung für eine Regelschaltung für den Schalttransistor des Schaltreglers liefert, zwischen der Primärwicklung und der Sekundärwicklung, um eine Abschirmung zwischen der Primär- und der Sekundärwicklung zu bewirken. Die Einbettung einer mit dem Schalttransistor verbundenen heißen Wicklung zwischen zwei kalten Wicklungen mit dem Zweck, die Störstrahlung der heißen Wicklung zu verringern, ist dort nicht vorgesehen.

Bei den erfindungsgemäßen Lösungen ist also die (Primär-) Wicklung oder der Abschnitt der (Primär-) Wicklung, dessen Anfang oder Ende an den Schalter angeschlossen ist, so angeordnet, daß benachbarte Leiterelemente des Schaltungsaufbaus bei den Schaltvorgängen auftretende elektromagnetische Abstrahlungen des Wandlers in ihrer Wirkung abschwächen. Zudem werden durch die in dem unabhängigen Ansprüchen angegebenen Maßnahmen - entgegen den üblicherweise bei der Fertigung von elektrischen Wandlern aufgestellten Forderungen - hier gerade vorteilhafte und erwünschte Zusatzkapazitäten zwischen dem Abschnitt der (Primär-) Wicklung, dessen Anfang oder Ende an den Schalter angeschlossen ist, und den weiteren Abschnitten der (Primär-) Wicklung oder aber der genannten Leiterbahn der Leiterplatte geschaffen. In einer Ersatzschaltbild-Betrachtung läßt sich letzteres durch einen kapazitätslosen Wandler beschreiben, bei dem parallel zu dem die Versorgungsspannung zu- bzw. abschaltenden Schalter ein Kondensator in der Größenordnung der genannten Zusatzkapazität angeschlossen ist, bei dem also, verkürzt gesprochen, das sogenannte "heiße" Ende des Schalters über einen Kapazität mit dem primärseitigen Bezugspotential verbunden ist.

Durch die in den beiden Hauptansprüchen angegebenen Maßnahmen können ansonsten erforderliche Vorkehrungen zur Abschirmung hochfrequenter Abstrahlungen reduziert werden oder - wie beispielsweise der parallel zu dem Schalter angeschlossene Kondensator - gänzlich entfallen, wodurch insgesamt die Kosten sowie der Platzbedarf für die Schaltungsanordnung vorteilhaft verringert werden.

Weitere Vorteile und Merkmale der Erfindung werden nachfolgenden anhand der Zeichnung an einem bevorzugten Ausführungsbeispiel erläutert. Darin zeigen:

Fig. 1      ein Schaltungsbeispiel für einen erfindungsgemäßen Schaltnetzteil-Transformator,

Fig. 2      die Anordnung der Wicklungen eines erfindungsgemäß ausgebildeten Schaltnetzteil-Transformators im Schnitt und

Fig. 3      einen Teilschnitt durch einen erfindungsgemäß ausgebildeten Schaltnetzteil-Transformator.

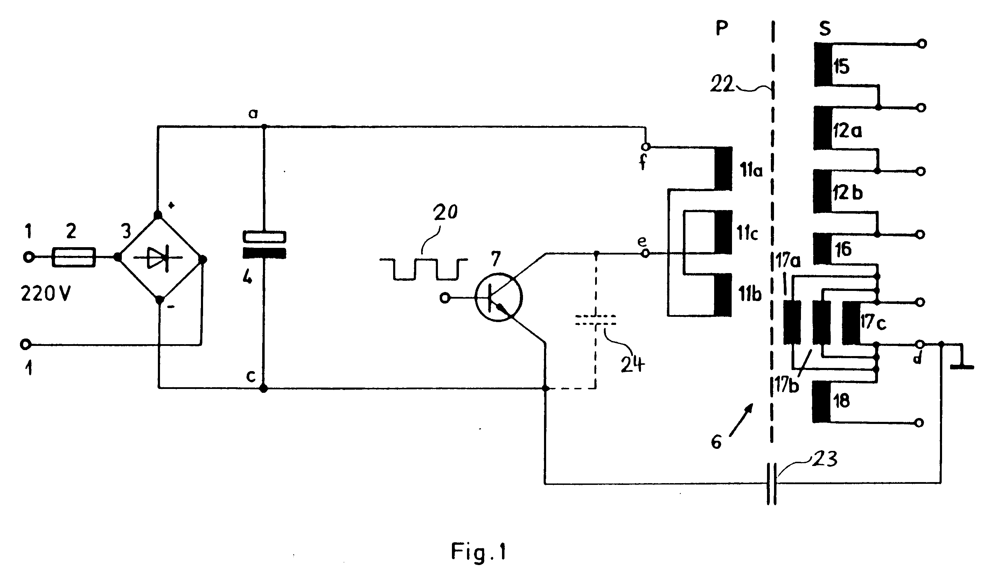

Fig. 1 zeigt zwei Netzklemmen 1, an die eine Wechselspannung von 220 V gelegt ist, eine Feinsicherung 2, einen Brückengleichricter 3 und einen Ladekondensator 4, die in bekannter Weise zusammenwirken, um an den Klemmen a, c des Ladekondensators 4 eine im wesentlichen gleichgerichtete und geglättete Betriebsspannung bereitzustellen. Der an der Klemme c liegende Minuspol der Betriebsspannung ist im folgenden als primärseitiges Bezugspotential gewählt.

Ein Schaltnetzteil- Transformator 6 ist primärseitig über einen Schalttransistor 7 mit der Betriebsspannung in der Weise verbunden, daß der Strom, von der Klemme a ausgehend, die Primärwicklung 11 mit ihren Wicklungsabschnitten 11a, 11b und 11c und sodann die Kollektor-Emitter-Strecke des Schalttransistors 7 bis zur Klemme c durchfließt, sofern der Schalttransistors 7 leitend gesteuert ist. Sekundärwicklungen 12, 15, 16, 17 und 18 liefern geeignete Betriebsspannungen für nicht näher dargestellte Verbraucher, z.B. die Versorgungsspannung für eine Zeilenablenkschaltung in einem Fernsehempfänger oder dgl. Die Wicklungen 12 und 17 werden gebildet durch zwei hintereinander geschaltete Wicklungsabschnitte 12a, 12b bzw. durch drei parallel geschaltete Wicklungsabschnitte 17a, 17b und 17c. Die Sekundärwicklungen 15, 12, 16, 17, 18 sind in dieser Reihenfolge hintereinandergeschaltet, wobei die an einer Klemme d vorgesehene Verbindung zwischen den Wicklungen 17 und 18, in Fig. 1 durch das Zeichen "Masse" angedeutet, als sekundärseitiges Bezugspotential gewählt wurde.

Der Schalttransistor 7 wird von eine an seine Basis gelegten Schaltspannung 20 periodisch leitend bzw. gesperrt gesteuert. Der die Primärwicklung 11 durchfließende Strom steigt jeweils sägezahnförmig an und fällt dann durch das periodish erfolgende Sperren des Schalttransistors 7 im wesentlich wieder auf null.

Der Transformator weist einen aus ferritischem Werkstoff gefertigten, weiter unten näher beschriebenen und in Fig. 1 schematisch durch eine gestrichelte Linie dargestellten Transformatorkern 22 auf.

Ein Kondensator 23 der Größenordnung 1 bis 4 nF, der an die Klemmen c und d angeschlossen ist, koppelt kapazitiv das primärseitige an das sekundärseitige Bezugspotential und gewährleistet die bei Schaltnetzteilen erforderliche Störspannungsunterdrückung.

Bei Schaltnetzteilen nach dem Stand der Technik ist bei bestimmten Anwendungsfällen ein in Fig. 1 mit seinen Anschlüssen gestrichelt dargestellter Hochfrequenz-Löschkondensator 24, der eine Kapazität von etwa 50 bis 100 pF aufweist, erforderlich, der parallel zu der Kollektor-Emitter-Strecke des Schalttransistors 7 angeschlossen ist. Dieser Löschkondensator 24 wird - wie weiter unten noch näher ausgeführt - bei dem erfindungsgemäßen Schaltnetzteil-Transformator 6 nicht mehr benötigt.

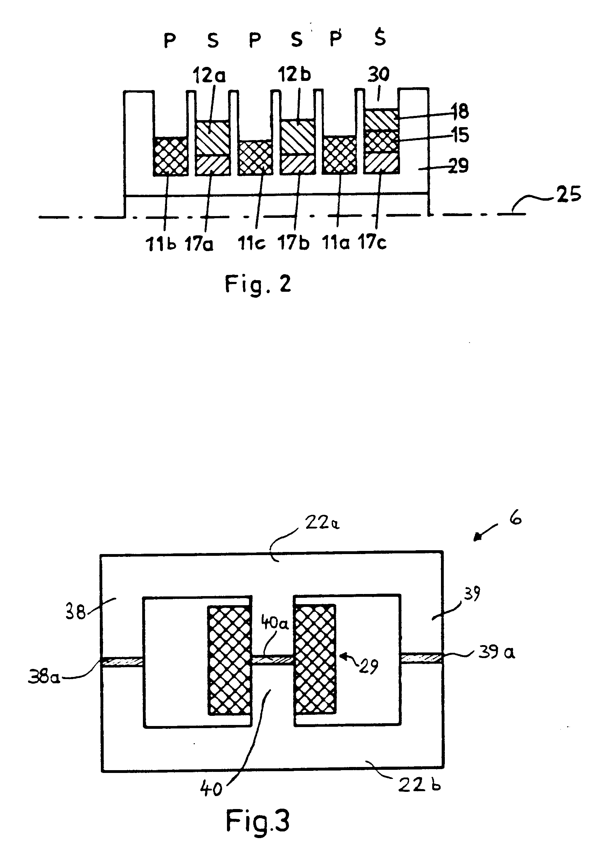

Fig. 2 zeigt in einer Schnittdarstellung einen um eine Symmetrieachse 25 rotationssymmetrisch aufgebauten Spulenträger 29, der sechs Kammern 30 aufweist, in denen - Kammer für Kammer abwechselnd - Primär- zbw. Sekundärwicklungen, in der Zeichnung verdeutlicht durch die Buchstaben "P" bzw. "S", angeordnet sind. Durch hier nicht näher beschriebene geeignete Maßnahmen ist eine elektrischen Schutzvorschriften genügende galvanische Trennung zwischen der Primär- und der Sekundärseite des Transformators gewährleistet.

Fig. 3 zeigt in einem nichtmaßstäblichen Teilschnitt eine Seitenansicht des Transformators 6, bei der der Übersichtlichkeit halber die an dem Spulenträger 29 angeordneten Wicklungen nicht als einzelne Wicklungen dargestellt sind. Der Transformatorkern 22 ist EE-förmig ausgebildet, der Spulenträger 29 ist am Mittelschenkel 40 des Transformatorkerns 22 angeordnet.

Aus hier nicht näher erläuterten Gründen weist der Transformatorkern 22 sowohl an seinen beiden Außenschenkeln 38, 39 wie auch an seinem Mittelschenkel 40 Unterbrechungen 38a, 39a bzw. 40a auf, die zwei im wesentlichen zueinander spiegelbildliche Hälften 22a, 22b des Transformatorkerns 22 durch einen Bereich erhöhten magnetischen Widerstandes, beispielsweise Luft, voneinander trennen. An die Stelle von Luft können auch andere, ähnlich wie Luft wirkende Werkstoffe treten, wobei nicht alle Unterbrechungen 38a, 39a, 40a denselben Werkstoff aufweisen müssen. Eine solche, für bestimmte Anwendungszwecke geeignete Anordnung hat jedoch den Nachteil, daß unerwünschte elektromagnetische Effekte auftreten können.

Sind nämlich die beiden Hälften 22a, 22b des Transformatorkerns 22 voneinander durch einen - wenn auch kleinen - Bereich erhöhten magnetischen Widerstandes voneinander getrennt, so kann bei einer solchen Anordnung der Transformatorkern 22 unter bestimmten Voraussetzungen ähnlich einer Dipol-Antenne elektromagnetische Wellen aussenden. Die Grundvoraussetzung hierzu ist bei einem Schaltnetzteil-Transformator der geschilderten Art dadurch gegeben, daß bei dem mit der Schaltfrequenz 20 erfolgenden Abschalten des durch die Wicklung 11 fließenden Stroms in dieser Wicklung eine Spannung induziert wird, die im vorliegenden Fall bei 1.000 bis 2.000 V liegen kann. Da der Schalttransistor 7 mit dem Augenblick des Abschaltens die Verbindung zwischen der Primärwicklung 11 und der Klemme c des Ladekondensators 4, also dem primärseitigen Bezugspotential, unterbricht, liegt diese hohe Induktionsspannung nun an dem durch das Abschalten soeben frei gewordenen Ende e der Primärwicklung 11, das daher auch als "heißes" Ende bezeichnet wird, während das andere Ende f der Primärwicklung 11 fest mit der Klemme a des Ladekondensators verbunden bleibt.

Um nun in der soeben beschriebenen Situation des Abschaltens zu verhindern, daß - ausgehend von der Primärwicklung 11 - über den Transformatorkern 20 elektromagnetische Wellen abgestrahlt werden, wird bei herkömmlichen Schaltnetzteil-Transformatoren das "heiße" Ende e der Primärwicklung über den vorher erwähnten HF-Löschkondensator 24 mit dem an der Klemme c anliegenden primärseitigen Bezugspotential verbunden. Auf diese Weise können die in den genannten Spannungsspitzen enthaltenen hochfrequenten Anteile abgeleitet und die dessen HF-Anteilen entsprechenden elektromagnetischen Störstrahlungen im wesentlichen unterdrückt werden. Solche Kondensatoren sind jedoch - zumal wegen der erforderlichen Spannungsfestigkeit - verhältnismäßig teuer und verursachen zusätzliche Raum- und Bestükkungsaufwand.

Bei dem hier dargestellten erfindungsgemäßen Schaltnetzteil-Transformator 6 ist ein solcher zusätzlicher Kondensator nicht erforderlich. Vielmehr ist die Primärwicklung 11 mit ihren Wicklungsabschnitten 11a bis 11c so angeordnet, daß vorteilhaft von vornherein ungünstige Abstrahlbedingungen geschaffen sind. Hierzu ist der Abschnitt der Primärwicklung 11, der direkt an den Schalttransistor 7 angeschlossen ist, also der Wicklungsabschnitt 11c, in einer der mittleren der Kammern 30 des Spulenträgers 29 angeordnet, wo sie zu beiden Seiten von Kammern umgeben ist, in denen Sekundärwicklungen vorgesehen sind, nämlich die Wicklungen 12a, 17a bzw. 12b, 17b. In den zu beiden Seiten jeweils daran anschließenden Kammern sind die beiden anderen Primärwicklungsabschnitte 11b bzw. 11a angeordnet.

Die Auswirkungen einer solchen Anordnung werden verdeutlicht, faßt man den Transformatorkern 22 in einer gedachten Ersatzschaltung wieder als Antenne, beispielsweise als Ferritantenne, auf, deren Sendewicklung auf dem Ferritktern zwischen weiteren Wicklungen angeordnet ist. Die Abstrahleigenschaften eine solchen Antenne können durch die weiteren Wicklungen in erheblichem Maß beeinträchtigt werden.

In einer weiteren Ersatzschaltbild-Betrachtung können überdies noch bei der geschilderten Anordnung der Wicklungen auftretende Wicklungskapazitäten berücksichtigt werden, insbesondere Kapazitäten zwischen dem primärseitigen "heißen" Wicklungsabschnitt 11c und den weiteren Primär-Wicklungsabschnitten 11a bzw. 11b sowie den sekundärseitigen Wicklungsabschnitten 12a, 17a bzw. 12b, 17b, zwischen denen der "heiße" Wicklungsabschnitt 11c angeordnet ist. Durch diese Wicklungskapazitäten werden die Abstrahleigenschaften vorteilhaft verschlechtert, denn die Wicklungskapazitäten wirken schaltungsmäßig ähnlich dem zwischen die Klemmen c und e in Fig. 1 angeschlossenen HF-Löschkondensator 24, der daher entfallen kann.

Da aus hier nicht näher erörterten Gründen jeweils abwechselnd Kammern mit primär- und Kammern mit sekundärseitigen Wicklungen oder Wicklungsabschnitten nebeneinander angeordnet sind - vgl. Fig. 2 - verdient es besondere Beachtung, daß bei dem dargestellten Ausführungsbeispiel die zwischen den primär- und den sekundärseitigen Wicklungen oder Wicklungsabschnitten auftretenden Wicklungskapazitäten über den ohnehin vorhandenen Kondensator 23 wechselspannungsmäßig an den primärseitigen Stromkreis angekoppelt sind. Hierbei versteht es sich, daß der Kondensator 23 anstelle der Klemme c beispielsweise and die Klemme a angeschlossen sein kann. Wichtig ist in diesem Zusammenhang lediglich die Tatsache, daß insbesondere auch die zwischen dem "heißen" Wicklungsabschnitt 11c und den sie gewissermaßen seitlich umklammernden Wicklungsabschnitten 12a, 17a bzw. 12b, 17b auftretenden Wicklungskapazitäten über den Kondensator 23 wechselspannungsmäßig mit dem primärseitigen Bezugspotential verbunden sind. Da es sich bei den Wicklungsabschnitten 12a, 17a, 12b, 17b um die dem "heißen" Wicklungsabschnitten 11c am nächsten benachbarten Wicklungen handelt, ist ihr Beitrag zu dem Kondensator gemäß der obigen Ersatzschaltbild-Betrachtung, der den HF-Kondensator 24 überflüssig macht, im dargestellten Ausführungsbeispiel besonders groß.

**Patentansprüche**

1.    Schaltnetzteil- oder Zeilentransformator nach dem Sperr- oder nach dem Flußwandlerprinzip für ein Fernsehgerät, bei dem die Versorgungsspannung an eine in Abschnitte (11a, 11b, 11c) aufgeteilte Primärwicklung (11) des Transformators (6) gelegt ist und über einen Schalter (7) periodisch abwechselnd zu- und abgeschaltet wird, **dadurch gekennzeichnet,** daß der Abschnitt (11c) der Primärwicklung (11), dessen Anfang oder Ende (e) an den Schalter (7) angeschlossen ist, auf dem Spulenträger (29) räumlich zwischen zwei weiteren Abschnitten (11a, 11b) der Primärwicklung (11) angeordnet ist, die nicht unmittelbar an den Schalter (7) angeschlossen sind.

2.    Transformator nach Anspruch 1 oder 2, **dadurch gekennzeichnet,** daß zwischen je zwei Abschnitten (11a, 11c, 11b) der Primärwicklung (11) eine Sekundärwicklung (12b, 17b; 12a, 17a) angeordnet ist.

3. Transformator nach Anspruch 1, **dadurch gekennzeichnet,** daß die Abschnitte der Wicklung (11, 12, 17) im wesentlichen konzentrisch übereinander angeordnet sind.

4. Transformator nach Anspruch 1**, dadurch gekennzeichnet,** daß zwei oder mehr Abschnitte der Wicklung nebeneinander angeordnet sind.

5. Transformator nach einem der Ansprüche 1 bis 4, **dadurch gekennzeichnet,** daß die Abschnitte der Wicklungen (11) in Kammern (30) eines Spulenträgers (29) angeordnet sind.

**Claims**

1. Switched power supply transformer or line transformer according to the switching regulator or according to the flux converter principle for a television set, in which the supply voltage is applied to a primary winding, subdivided into sections (11a, 11b, 11c), of the transformer (6) and is periodically switched alternately on and off by means of a switch (7), **characterised in that** the section (11c) of the primary winding (11), the beginning or end (e) of which is connected to the switch (7), is spatially arranged on the coil carrier (29) between two further sections (11a, 11b) of the primary winding (11), which are not connected directly to the switch (7).

2. Transformer according to claim 1 or 2, **characterised in that** between each pair of sections (11a, 11b, 11c) of the primary winding (11) a secondary winding (12b, 17b; 12a, 17a) is arranged.

3. Transformer according to claim 1, **characterised in that** the sections of the winding (11, 12, 17) are arranged substantially concentrically one above the other.

4. Transformer according to claim 1, **characterised in that** two or more sections of the winding are arranged next to one another.

5. Transformer according to any one of claims 1 to 4, **characterised in that** the sections of the windings (11) are arranged in compartments (30) of a coil carrier (29).

**Revendications**

1. Transformateur pour bloc d'alimentation de commutation ou transformateur de lignes selon le principe du transformateur bloqué ou convertisseur de flux pour un appareil de télévision dans lequel la tension d'alimentation est appliquée à un enroulement primaire (11) du transformateur (6) qui est subdivisé en portions (11a, 11b, 11c) et qui est mis en circuit et hors circuit périodiquement en alternance par un commutateur (7), **caractérisé en ce** que la portion (11c) de l'enroulement (11) dont le début ou la fin (e) est raccordé au commutateur (7) est placée sur le porte-bobines (29) dans l'espace entre deux autres portions (11a, 11b) de l'enroulement primaire (11) qui ne sont pas directement raccordées au commutateur (7).

2. Transformateur selon la revendication 1 ou 2, **caractérisé en ce** qu'un enroulement secondaire (12b, 17b : 12a, 17a) est placé entre deux portions respectives (11a, 11c, 11b) de l'enroulement primaire (11).

3. Transformateur selon la revendication 1, **caractérisé en ce** que les portions de l'enroulement (11, 12, 17) sont placées substantiellement de manière concentrique les unes au-dessus des autres.

4. Transformateur selon la revendication 1, **caractérisé en ce** que deux portions de l'enroulement ou plus sont placées l'une à côté de l'autre.

5. Transformateur selon l'une des revendications 1 à 4, **caractérisé en ce** que les portions des enroulements (11) sont placées dans des compartiments (30) d'un porte-bobines (29).

Fig.1

EP 0 253 978 B1

P  S  P  S  P  S

Fig. 2

Fig. 3